# FASCICULE DE BREVET EUROPEEN

(11) **EP 0 837 033 B1**
(45) Date de publication et mention de la délivrance du brevet: **07.03.2001**
(21) Numéro de dépôt: 97402343.4
(22) Date de dépôt: 06.10.1997
(51) Int. Cl.: C01B 15/013

(54) **Procédé de purification de peroxyde d'hydrogène**
Verfahren zur Reinigung von Wasserstoffperoxid
Process for the purification of hydrogen peroxide

(30) Priorité: 15.10.1996 FR 9612569
(43) Date de publication de la demande: 22.04.1998
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Dhalluin, Jean-Marie, 71100 Chalon/Saone (FR); Wawrzyniak, Jean-Jacques, 87220 Feytiat (FR); Ledon, Henry, 78000 Versailles (FR)
(74) Mandataire: Conan, Philippe Claude

(56) Documents cités:
- EP-A- 0 626 342
- DE-A- 4 222 109
- US-A- 4 879 043
- US-A- 5 262 058

## Description

La présente invention porte sur un procédé de purification de solutions aqueuses de peroxyde d'hydrogène pour en éliminer les cations et les acides organiques.

L'eau oxygénée a de multiples usages industriels et doit, dans le cas du domaine de l'électronique présenter une pureté élevée donc être débarrassée de ses cations et acides organiques.

Les méthodes de purification décrites à ce jour font état de la distillation, de traitement sur résines échangeuses d'ions comme dans la demande de brevet français FR 1 043 082, de traitement sur résines échangeuses auxquelles sont additionnés des chelatants dans la demande de brevet français FR 2 624 500, d'un procédé d'osmose inverse comme dans le brevet américain 4 879 043.

Cependant, ces méthodes ne donnent pas entièrement satisfaction pour l'élimination de certaines impuretés telles que notamment les ions ferrique Fe⁺⁺⁺ ou aluminique Al⁺⁺⁺.

La présente invention se propose de remédier à ces inconvénients.

L'invention a pour objet un procédé de purification de solutions aqueuses de peroxyde d'hydrogène caractérisé en ce qu'un ou plusieurs macroligands sont additionnés à ladite solution et le mélange résultant est forcé à travers une membrane d'ultrafiltration.

Les solutions aqueuses d'eau oxygénée utilisées habituellement en électronique titrent de 30 à 35 % en poids. L'invention peut s'appliquer cependant à des solutions titrant jusqu'à 75 % en poids. A ces solutions aqueuses sont additionnés des macroligands ; l'invention a notamment pour objet un procédé dans lequel les macroligands comportent un ou plusieurs groupes fonctionnels choisis parmi les groupes carboxyliques, sulfoniques, phosphoniques, ou fonctions azotées telles que les fonctions amines aromatiques ou non aromatiques ou les fonctions amines N-oxydées.

L'eau oxygénée additionnée du ou des ligands est alors forcée sous pression à travers une membrane d'ultrafiltration. La membrane est de nature résistante à l'oxydation du type polymère fluoré (PTFE, PVDF,PFA) et d'un seuil de coupure adapté aux polymères employés. La pression de travail est de 1 bar à quelques bars, en général 3 à 4 bars ; l'invention a particulièrement pour objet un procédé dans lequel la membrane d'ultrafiltration est une membrane en polymère fluoré, notamment en polydifluorure de vinyle (PVDF), en polytétrafluoroéthylène (PTFE) ou en polyfluoroalkoxy (PFA).

Les résultats des essais développés dans les exemples mentionnés ci-après montrent que des résultats inférieurs à 10ppb (parties par milliard) sont obtenus pour les ions Fe⁺⁺⁺ et Al⁺⁺⁺' lorsque les macroligands sont choisis parmi l'homopolymère de la 4-vinylpyridine, les copolymères 2/8 et 1/9 de styrène-4-vinyl pyridine, les copolymères acrylique phosphate-sulfonate (Mw=500000), le copolymère acrylique phosphate (Mw=500000), et l'acide polyvinylphosphonique (Mw=30 000), ce choix constituant une variante préférée de la présente invention.

Outre les bons résultats obtenus, un avantage de ce procédé consiste en ce que cette méthode de purification peut être mise en oeuvre en amont ou en aval d'autres étapes de purification.

L'invention a aussi pour objet un procédé de fabrication de peroxyde d'hydrogène ultra pur non stabilisé à partir du produit brut préparé selon les méthodes connues de l'homme du métier telles que par exemple, l'autooxydation de l'anthraquinone ou de ses dérivés, l'oxydation anodique du couple SO₄⁻⁻/HSO₄⁻ , la réduction cathodique de l'oxygène ou la synthèse directe, comprenant éventuellement une ou plusieurs étapes de purification choisies parmi la distillation, le passage sur résines échangeuses d'ions, le passage sur colonne d'adsorbants notamment de zéolites, ou osmose inverse, caractérisé en ce qu'il comprend en outre au moins une étape d'ultrafiltration selon le procédé tel que défini précédemment.

Le peroxyde d'hydrogène ultra-pur ainsi produit répond aux normes imposées par les utilisateurs notamment les fabricants de composants électroniques.

Un autre aspect de la présente invention concerne une installation de production de peroxyde d'hydrogène ultra-pur non stabilisé caractérisée en ce qu'elle comprend
a) une unité de synthèse de peroxyde d'hydrogène,
b) une unité de purification du peroxyde d'hydrogène brut obtenu à l'étape a) comportant au moins une étape d'ultrafiltration selon le procédé, et
c) un réservoir de stockage du peroxyde d'hydrogène purifié en b) permettant d'amortir la variation de consommation de l'utilisateur final, et caractérisée en ce que ladite installation est située sur le même site que l'utilisateur final dudit peroxyde d'hydrogène purifié et notamment sur le site d'une usine de fabrication de composants électroniques.

Les exemples suivants illustrent l'invention sans toutefois la limiter.

### EXEMPLE 1

Une eau oxygénée 70 % de qualité industrielle issue du procédé à l'anthraquinone a été diluée à 30 % et additionnée de 0,25 % de copolymère acrylosulfonique de Mw=4500. Cette solution a été ensuite ultrafiltrée sur une mini-ultrasette de FILTRON équipée d'une membrane en polyéthersulfone de 50 cm² à raison de 1dm³/mn de retentat et 1,3 cm³/mn de filtrat. Résultats (en ppb)

| | K | Fe | Al | Ni | Cr | Mn | Sn |
|---|---|---|---|---|---|---|---|
| H₂O₂30% | 17 | 123 | 124 | 13 | 22 | 2 | 7800 |
| Filtrat | 8 | 12 | 13 | <4 | 5 | <0,2 | 40 |

### EXEMPLE 2

A une eau oxygénée 30 % en poids de qualité électronique est additionné 0,25 % en poids d'acide polyvinylphosphonique de Mw=30000. La solution est alors ultrafiltrée sur mini-ultrasette FILTRON 3K à raison de 1,5 dm³/mn de retentat et 0,7 cm³/mn de filtrat.
Résultats (en ppb)

| | K | Cu |
|---|---|---|
| H₂O₂30% | 0,95 | 0,94 |
| Filtrat | 0,45 | 0,21 |

### EXEMPLE 3

0,25 % en poids d'homopolymère de la 4-vinylpyridine sont additionnés à de l'eau oxygénée industrielle. La solution résultante est ultrafiltrée sur membrane 1K. Résultats (en ppb)

| | Si | Fe | Al | Cr | P | Sn |
|---|---|---|---|---|---|---|
| H₂O₂30% | 10 300 | 127 | 407 | 23 | 22 200 | 7 700 |
| Filtrat | 1 680 | 3 | <9 | 16 | 11 600 | 100 |

### EXEMPLE 4

En opérant de manière analogue à l'exemple 3, et en utilisant comme macroligands, un copolymère 2/8 de styrène-4-vinylpyridine et le copolymère 1/9, on obtient les résultats suivants :

| | Fe | Al | Cr | P | Sn |
|---|---|---|---|---|---|
| H₂O₂30% | 70 | 140 | 17 | 23 800 | 7 400 |
| Filtrat | <4 | <9 | <4 | 11 200 | <20 |

### EXEMPLE 5

En opérant comme à l'exemple 1, en utilisant les macroligands cités ci-dessous, on obtient les résultats suivants :

| | K | Fe | Al | Cr | Mg |
|---|---|---|---|---|---|
| H₂O₂industrielle 30 % | 12 | 56 | 95 | 20 | 50 |
| A | <8 | 16 | 40 | <4 | 24 |
| B | <8 | 8 | <9 | <4 | 14 |
| C | <8 | 3 | 25 | <4 | 30 |
| D | <8 | 4 | 15 | <4 | 2 |

| | | | | | |
|---|---|---|---|---|---|
| A: copolymère acrylique-sulfonate | | | | | |
| B: copolymère acrylique-phosphate-sulfonate Mw = 500 000 | | | | | |
| C: copolymère acrylique-phosphate Mw = 500 000 | | | | | |
| D: acide polyvinylphosphonique Mw=30 000. | | | | | |

## Revendications

1. Procédé de purification de solutions aqueuses de peroxyde d'hydrogène, caractérisé en ce qu'un ou plusieurs macroligands sont additionnés à ladite solution et le mélange résultant est forcé à travers une membrane d'ultrafiltration.

2. Procédé selon la revendication 1 dans lequel les macroligands comportent un ou plusieurs groupes fonctionnels choisis parmi les groupes carboxyliques, sulfoniques, phosphoniques, ou fonctions azotées telles que les fonctions amines aromatiques ou non aromatiques ou les fonctions amines N-oxydées.

3. Procédé selon l'une des revendications 1 ou 2 dans lequel la membrane d'ultrafiltration est une membrane en polymère fluoré, notamment en PVDF, en PTFE ou en PFA.

4. Procédé selon la revendication 2 dans lequel le macroligand est choisi parmi l'homopolymère de la 4-vinylpyridine, les copolymères 2/8 et 1/9 de styrène-4-vinylpyridine, les copolymères acrylique-phosphate-sulfonate (Mw=500000), le copolymère acrylique phosphate (Mw=500000) et l'acide polyvinyl-phosphonique (Mw=30000).

5. Procédé de fabrication de peroxyde d'hydrogène ultra pur non stabilisé à partir du produit brut comprenant éventuellement une ou plusieurs étapes de purification choisies parmi l'osmose inverse, la distillation, le passage sur résines échangeuses d'ions ou le passage sur colonne d'adsorbants notamment de zéolites, caractérisé en ce qu'il comprend en outre au moins une étape d'ultrafiltration selon le procédé tel que défini à l'une des revendications 1 à 4.

6. Installation de production de peroxyde d'hydrogène ultra pur non stabilisé caractérisée en ce qu'elle comprend
a) une unité de synthèse de peroxyde d'hydrogène,
b) une unité de purification du peroxyde d'hydrogène brut obtenu à l'étape a) comportant au moins une étape d'ultrafiltration selon le procédé tel que défini à l'une des revendications 1 à 4, et
c) un réservoir de stockage du peroxyde d'hydrogène purifié en b) permettant d'amortir la variation de consommation de l'utilisateur final, et caractérisée en ce que ladite installation est située sur le même site que l'utilisateur final dudit peroxyde d'hydrogène purifié et notamment sur le site d'une usine de fabrication de composants électroniques.

7. Installation selon la revendication 6 dans laquelle lors de l'étape a) le peroxyde d'hydrogène est synthétisé par autooxydation de l'anthraquinone ou de ses dérivés.

## Claims

1. Process for the purification of aqueous solutions of hydrogen peroxide, characterized in that one or more macroligands are added to the said solution and the resulting mixture is forced through an ultrafiltration membrane.

2. Process according to Claim 1, in which the macroligands contain one or several functional groups chosen from carboxylic, sulphonic and phosphonic groups or nitrogen-containing functional groups such as aromatic or nonaromatic amine functional groups or N-oxidized amine functional groups.

3. Process according to either of Claims 1 and 2, in which the ultrafiltration membrane is a membrane made of fluoropolymer, especially of PVDF, PTFE or PFA.

4. Process according to Claim 2, in which the macroligand is chosen from 4-vinylpyridine homopolymer, the styrene/4-vinylpyridine 2/8 and 1/9 copolymers, acrylic/phosphate/sulphonate copolymers (Mw = 500 000), acrylic phosphate copolymer (Mw = 500 000) and polyvinylphosphonic acid (Mw = 30 000).

5. Process for the manufacture of unstabilized ultrapure hydrogen peroxide from the crude product, optionally including one or more purification stages chosen from reverse osmosis, distillation, passing over ion exchange resins or passing over a column of adsorbents, especially of zeolites, characterized in that it additionally includes at least one ultrafiltration stage according to the process as defined in one of Claims 1 to 4.

6. Plant for the production of unstabilized ultrapure hydrogen peroxide, characterized in that it includes
a) a hydrogen peroxide synthesis unit,
b) a unit for purification of the crude hydrogen peroxide obtained in stage a), comprising at least one ultrafiltration stage according to the process as defined in one of Claims 1 to 4, and
c) a storage vessel for the hydrogen peroxide purified in b), making it possible to absorb the variation in the final user's consumption, and characterized in that the said plant is situated on the same site as the final user of the said purified hydrogen peroxide and especially on the site of a factory for the manufacture of electronics components.

7. Plant according to Claim 6, in which during stage a) the hydrogen peroxide is synthesized by autooxidation of anthraquinone or of its derivatives.

## Patentansprüche

1. Verfahren zur Reinigung von wäßrigen Wasserstoffperoxidlösungen, dadurch gekennzeichnet, daß man der Lösung einen oder mehrere Makroliganden zusetzt und die resultierende Mischung durch eine Ultrafiltrationsmembran schickt.

2. Verfahren nach Anspruch 1, bei dem man Makroliganden einsetzt, die eine oder mehrere, unter Carboxyl-, Sulfonsäure-, Phosphonsäure- und stickstoffhaltigen Gruppen ausgewählte funktionelle Gruppen wie aromatische oder nichtaromatische Aminfunktionen oder N-oxidierte Aminfunktionen enthalten.

3. Verfahren nach Anspruch 1 oder 2, bei dem man als Ultrafiltrationsmembran eine Membran aus Fluorpolymer, insbesondere aus PVDF, PTFE oder PFA, einsetzt.

4. Verfahren nach Anspruch 2, bei dem man als Makroligand 4-Vinylpyridin-Homopolymer, Styrol-4-Vinylpyridin-2:8- und -1:9-Copolymer, Acrylphosphat-sulfonat-Copolymer (Mw= 500.000), Acrylphosphat-Copolymer (Mw=500.000) und Polyvinylphosphonsäure (Mw=30.000) einsetzt.

5. Verfahren zur Herstellung von unstabilisiertem ultrareinem Wasserstoffperoxid aus dem Rohprodukt, gegebenenfalls mit einem oder mehreren der Reinigungsschritte Umkehrosmose, Destillation, Durchgang durch Ionenaustauscherharze oder Durchgang durch eine Adsorptionsmittelsäule, insbesondere eine Zeolithsäule, dadurch gekennzeichnet, daß es darüber hinaus mindestens einen Ultrafiltrationsschritt gemäß dem Verfahren nach einem der Ansprüche 1 bis 4 umfaßt.

6. Vorrichtung zur Herstellung von unstabilisiertem ultrareinem Wasserstoffperoxid, dadurch gekennzeichnet, daß sie
a) eine Einheit zur Synthese von Wasserstoffperoxid,
b) eine Einheit zur Reinigung des in Schritt a) erhaltenen Wasserstoffperoxids mit mindestens einem Ultrafiltrationsschritt gemäß dem Verfahren nach einem der Ansprüche 1 bis 4 und
c) einen Speicherbehälter für das in Schritt b) gereinigte Wasserstoffperoxid, der ein Auffangen der Schwankungen im Verbrauch des Endverbrauchers ermöglicht, enthält, und dadurch gekennzeichnet, daß sie sich am gleichen Ort wie der Endverbraucher des gereinigten Wasserstoffperoxids und insbesondere am Ort einer Fertigungsanlage für elektronische Bauteile befindet.

7. Vorrichtung nach Anspruch 6, bei der die Wasserstoffperoxidsynthese in Schritt a) durch Autoxidation von Anthrachinon oder dessen Derivaten erfolgt.
